# EUROPEAN PATENT SPECIFICATION

(11) **EP 4 398 104 B1**
(45) Date of publication and mention of the grant of the patent: **25.03.2026**
(21) Application number: 22885665.4
(22) Date of filing: 12.10.2022
(51) Int. Cl.: G06F 9/54, G06F 12/14

(54) **INTER-PROCESS FUNCTION CALLING METHOD AND RELATED DEVICE**
ANRUFVERFAHREN ZWISCHEN PROZESSEN UND ZUGEHÖRIGE VORRICHTUNG
PROCÉDÉ D'APPEL DE FONCTION INTER-PROCESSUS ET DISPOSITIF ASSOCIÉ

(30) Priority: 28.10.2021 CN 202111266347
(43) Date of publication of application: 10.07.2024
(73) Proprietor: Huawei Technologies Co., Ltd., Shenzhen, Guangdong 518129 (CN)
(72) Inventor: WANG, Weizhou, Shenzhen, Guangdong 518129 (CN); MIAO, Xin, Shenzhen, Guangdong 518129 (CN)
(74) Representative: Körber, Martin Hans
(86) International application number: PCT/CN2022/124739
(87) International publication number: WO 2023/071786

(56) References cited:
- CN-A- 109 933 441
- CN-A- 111 949 596
- CN-A- 112 668 008
- CN-A- 113 220 469
- US-A1- 2021 286 628
- XIA YUBIN ET AL: "Boosting Inter-process Communication with Architectural Support", ACM TRANSACTIONS ON COMPUTER SYSTEMS (TOCS), ASSOCIATION FOR COMPUTING MACHINERY, INC, US, vol. 39, no. 1-4, 5 July 2022 (2022-07-05), pages 1 - 35, XP059024044, ISSN: 0734-2071, DOI: 10.1145/3532861

## Description

### TECHNICAL FIELD

This application relates to the field of computer security isolation technologies, and in particular, to an inter-process function calling method and a related device.

### BACKGROUND

A microkernel-based operating system architecture (microkernel architecture for short) is widely used in scenarios such as a cloud platform, an embedded device, a mobile device, and self-driving. In the microkernel architecture, real core functions are reduced to very few, and a large quantity of components, for example, a system program, in a conventional operating system kernel (for example, a monolithic kernel architecture Linux) are run in user-mode processes.

Currently, operating system architectures in the industry are divided into a microkernel architecture and a monolithic kernel architecture. The microkernel architecture (QNX, seL4, fuchsia, and the like) features a small kernel, and a lot of system service functions (such as file system, memory management, network, and driver) are run in user mode as independent service processes (referred to as system services below). Kernel mode retains only key functions (such as interrupt handling, timer function, inter-process communication (inter-process communication, IPC), and memory mapping). In the microkernel architecture, a user process communicates with a system service process through IPC, to implement security isolation between processes. When the user process needs to call a function of the system service process, the user process sends input parameter data of the function to the system service process through IPC. In this procedure, the input parameter data is copied. Generally, the input parameter data is copied two times. At the first time, the input parameter data is copied from the user process to a kernel data segment. At the second time, the input parameter data is copied from the kernel data segment to a data segment in the system service process. In this way, the system service process runs the function based on the input parameter data.

However, the foregoing manner of calling a function based on IPC increases overheads as an amount of input data increases. This affects device performance.

CN111949596 A discloses a communication method, system and medium between microkernel modules based on Memory Protection Keys (MPK) technology.

### SUMMARY

Embodiments of this application provide an inter-process function calling method and a related device, to improve efficiency with which a first process executes a function of a system service process.

A first aspect of embodiments of this application provides an inter-process function calling method. The method may be used in an embedded device with low-computing power or an Internet of things (Internet of things, IoT) device. The method includes: A first process triggers a first system call according to a first function. The first function is a function readable and executable for all processes in user mode. The first function is used to trigger the first system call and call a second function of a first system service process. The first system call instructs a kernel to configure a first access permission with which the first process accesses physical memory address space of the first system service process. The physical memory address space stores the second function. The second function is a function that implements a functionality of the first system service process. The first process receives indication information that is sent by the kernel and that is used to respond to the first system call. The indication information indicates whether the first access permission is enabled. The first process executes the second function in the physical memory address space according to the first function when it is determined that the indication information indicates that the first access permission is enabled.

In embodiments of this application, the first function readable and executable for all processes in the user mode is used, so that the first process may remotely call, according to the first function, the second function stored in the physical memory address space of the first system service process. In this way, the first process executes the second function. In comparison with a conventional technology in which an IPC-based function calling manner requires process switching and data copying, in embodiments of this application, process switching and data copying are not required when the first process calls the second function of the first system service process. From a mechanism logic level, this improves performance of calling the second function of the first system service process. In addition, it is specified that the first function is needed for the first process to execute the second function, and a scenario in which the first process executes the second function is limited. Alternatively, it is understood as that the first process needs to execute the second function in a public area (in other words, the first function readable and executable for all processes are stored). This reduces security risks that are caused when a user unconditionally executes the second function.

Optionally, in a possible implementation of the first aspect, the first function is further used to trigger a second system call. The second system call is used by the kernel to cancel the first access permission. After the step in which the first process executes the second function, the method further includes: The first process triggers the second system call according to the first function. The second system call instructs the kernel to cancel the first access permission.

In this possible implementation, after a thread (or this is understood as a task) ends, the first access permission may be canceled, to prevent another thread of the first process from randomly accessing the physical memory address space. This ensures security of calling the second function.

Optionally, in a possible implementation of the first aspect, the first access permission includes a read and execute permission for a code segment in the first system service process and a read and write permission for a data segment in the first system service process. The first system call is further used to trigger the kernel to configure a read and execute permission for a code segment in the first process and a read and write permission for a data segment in the first process. In other words, the first system call is used to trigger the kernel to set the code segment in the first system service process to be readable and executable, and set the data segment in the first system service process to be readable and writable (or it is understood that the physical memory address space of the first system service process is readable and executable for the first process). In addition, to ensure security of calling the second function, the code segment in the first process may be configured to be unreadable and non-executable.

In this possible implementation, the first process obtains the first access permission by using the first system call, so that the first process subsequently calls and executes the second function.

Optionally, in a possible implementation of the first aspect, before the step in which a first process triggers a first system call according to a first function, the method further includes: The first process obtains a first task. The first task includes that the first process executes the second function. The first task may be understood as a thread. Alternatively, the first task may be understood as a first task determined based on a user operation.

In this possible implementation, the first task is determined based on the user operation, and the second function in the physical memory address space of the first system service process is called and executed according to the first function. In a procedure of executing the second function, data copying and the process switch are avoided. This improves efficiency with which the second function is executed.

Optionally, in a possible implementation of the first aspect, the first process is a user process or a second system service process. In other words, the first process may be a process that corresponds to an application running in the user mode, or the first process is a process that corresponds to a second system service program running in the user mode. The first system service process is a process that corresponds to a first system service program running in the user mode. The first system service process and the second system service process may be system service processes of a same type or system service processes of different types. This is not specifically limited.

In this possible implementation, the method may be used in a scenario in which a user-mode process calls a system service function of a system service process.

Optionally, in a possible implementation of the first aspect, the first system service process integrates at least two subsystem service processes in the user mode. The subsystem service process is a driver process, a network management process, or a file system management process. The second function is a function of one subsystem service process of the at least two subsystem service processes. A third function is a function readable and executable for all processes in the user mode. The third function is used to call a function of the other subsystem service process of the at least two subsystem service processes. The step in which the first process executes the second function in the physical memory address space according to the first function includes: The first process calls and executes the third function according to the second function. Before the first process returns to the first function, the first access permission remains unchanged.

In this possible implementation, for a nesting scenario in which the first function and the third function have a same attribute, in this scenario, after the third function is executed, the first process needs to return to the first function. To avoid a plurality of system calls in one thread task (namely, enabling the first access permission, disabling the first access permission, enabling the first access permission again, and disabling the first access permission again), when an execution domain (namely, physical memory address space in which the task is performed) remains unchanged, the access permission does not need to be changed.

Optionally, in a possible implementation of the first aspect, the method is used in a microkernel architecture, and the first system service process is a driver process, a network management process, or a file system management process.

In this possible implementation, the method may be used in the microkernel architecture. The first process may complete a driver task, a network management task, and/or a file system management task by calling the first function.

Optionally, in a possible implementation of the first aspect, the physical memory address space is address space managed by memory management unit (memory management unit, MMU) hardware, memory protection unit (memory protection unit, MPU) hardware, or physical memory protection (physical memory protection, PMP) hardware.

In this possible implementation, the method may be used in an MPU/PMP-based small embedded device. When the thread task is executed, there may be no need to switch between processes and copy data. This improves performance of the small embedded device.

Optionally, in a possible implementation of the first aspect, the computer device is an Internet of things IoT device.

In this possible implementation, the method may be used in an IoT device. When the thread task is executed, there may be no need to switch between processes and copy data. This improves performance of the IoT device.

A second aspect of embodiments of this application provides an inter-process function calling method. The method may be used in an embedded device with low-computing power or an Internet of things (Internet of things, IoT) device. The method includes: A kernel responds to a first system call triggered by a first process, and configures a first access permission with which the first process accesses physical memory address space of a first system service process. The physical memory address space stores a second function. The second function is a function that implements a functionality of the first system service process. The first system call instructs the kernel to configure the first access permission. The kernel sends indication information to the first process. The indication information indicates whether the first access permission is enabled. The first access permission is used by the first process to execute the second function in the physical memory address space.

In this embodiment of this application, the kernel may respond to the system call triggered by the first process and configure the first access permission, and indicate, by sending the indication information, that the first access permission is enabled. Thus, the first process may call and execute, based on the first access permission, the second function stored in the physical memory address space of the first system service process. In comparison with a conventional technology in which an IPC-based function calling manner requires process switching and data copying, in embodiments of this application, process switching and data copying are not required when the first process calls the second function of the first system service process. From a mechanism logic level, this improves performance of calling the second function of the first system service process.

Optionally, in a possible implementation of the second aspect, the step in which a first access permission with which the first process accesses physical memory address space of a first system service process is configured includes: The kernel configures the first access permission when it is determined that the first process has a second access permission and the first access permission is not enabled. The indication information specifically indicates that the first access permission is enabled. The second access permission is a permission for calling the second function.

In this possible implementation, before configuring the first access permission of the first process, the kernel first determines whether the first process has a permission to call the second function (that is, the second access permission). The kernel configures the first access permission only when the first process has the second access permission. This may ensure that a process with no second access permission cannot call the second function. This ensures security of a system or security of the first system service process.

Optionally, in a possible implementation of the second aspect, the step further includes: the kernel responds to a second system call triggered by the first process, and cancels the first access permission. The second system call instructs the kernel to cancel the first access permission.

In this possible implementation, after a thread (or this is understood as a task) ends, the first access permission may be canceled, to prevent another thread of the first process from randomly accessing the physical memory address space. This ensures security of calling the second function.

Optionally, in a possible implementation of the second aspect, the first access permission includes a read and execute permission for a code segment in the first system service process and a read and write permission for a data segment in the first system service process. The first system call is further used to trigger the kernel to configure a read and execute permission for a code segment in the first process and a read and write permission for a data segment in the first process.

In this possible implementation, the first process obtains the first access permission by using the first system call, so that the first process subsequently calls and executes the second function.

Optionally, in a possible implementation of the second aspect, the first process is a user process or a second system service process.

In this possible implementation, the method may be used in a scenario in which a user-mode process calls a system service function of a system service process.

Optionally, in a possible implementation of the second aspect, the first system service process integrates at least two subsystem service processes in user mode. The subsystem service process is a driver process, a network management process, or a file system management process. When it is determined that the first process has the second access permission and the first access permission is enabled, the indication information indicates that the first access permission is enabled, and indicates a first function not to enable the second system call. The first function is a function readable and executable for all processes in the user mode. The first function is used to trigger the first system call, call the second function, and trigger the second system call. The second system call instructs the kernel to cancel the first access permission.

In this possible implementation, for a nesting scenario in which the first function and a third function have a same attribute, in this scenario, the indication information sent to the first process by the kernel may alternatively instruct the first function not to enable the second system call. In other words, to avoid a plurality of system calls in one thread task (namely, enabling the first access permission, disabling the first access permission, enabling the first access permission again, and disabling the first access permission again), when an execution domain (namely, physical memory address space in which the task is performed) remains unchanged, the access permission does not need to be changed.

Optionally, in a possible implementation of the second aspect, the method is used in a microkernel architecture, and the first system service process is a driver process, a network management process, or a file system management process.

In this possible implementation, the method may be used in the microkernel architecture. The first process may complete a driver task, a network management task, and/or a file system management task by calling the first function.

Optionally, in a possible implementation of the second aspect, the physical memory address space is address space managed by memory management unit MMU hardware, memory protection unit MPU hardware, or physical memory protection PMP hardware.

In this possible implementation, the method may be used in an MPU/PMP-based small embedded device. When the thread task is executed, there may be no need to switch between processes and copy data. This improves performance of the small embedded device.

Optionally, in a possible implementation of the second aspect, the computer device is an Internet of things IoT device.

In this possible implementation, the method may be used in an IoT device. When the thread task is executed, there may be no need to switch between processes and copy data. This improves performance of the IoT device.

A third aspect of this application provides a computer device. The computer device includes: a trigger unit, configured to trigger a first system call according to a first function, where the first function is a function readable and executable for all processes in user mode, the first function is used to trigger the first system call and call a second function of a first system service process, the first system call instructs a kernel to configure a first access permission with which the first process accesses physical memory address space of the first system service process, the physical memory address space stores the second function, and the second function is a function that implements a functionality of the first system service process; a receiving unit, configured to receive indication information that is sent by the kernel and that is used to respond to the first system call, where the indication information indicates whether the first access permission is enabled; and an execution unit, configured to execute the second function in the physical memory address space according to the first function when it is determined that the indication information indicates that the first access permission is enabled.

Optionally, in a possible implementation of the third aspect, the first function is further used to trigger a second system call. The second system call is used by the kernel to cancel the first access permission. The trigger unit is further configured to trigger the second system call according to the first function. The second system call instructs the kernel to cancel the first access permission.

Optionally, in a possible implementation of the third aspect, the first access permission includes a read and execute permission for a code segment in the first system service process and a read and write permission for a data segment in the first system service process. The first system call is further used to trigger the kernel to configure a read and execute permission for a code segment in the first process and a read and write permission for a data segment in the first process.

Optionally, in a possible implementation of the third aspect, the computer device further includes an obtaining unit, configured to obtain a first task. The first task includes that the first process executes the second function.

Optionally, in a possible implementation of the third aspect, the first process is a user process or a second system service process.

Optionally, in a possible implementation of the third aspect, the first system service process integrates at least two subsystem service processes in the user mode. The subsystem service process is a driver process, a network management process, or a file system management process. The second function is a function of one subsystem service process of the at least two subsystem service processes. A third function is a function readable and executable for all processes in the user mode. The third function is used to call a function of the other subsystem service process of the at least two subsystem service processes. The execution unit is specifically configured to call and execute the third function according to the second function. Before the first process returns to the first function, the first access permission remains unchanged.

Optionally, in a possible implementation of the third aspect, the computer device uses a microkernel architecture. The first system service process is a driver process, a network management process, or a file system management process.

Optionally, in a possible implementation of the third aspect, the physical memory address space is address space managed by memory management unit MMU hardware, memory protection unit MPU hardware, or physical memory protection PMP hardware.

Optionally, in a possible implementation of the third aspect, the computer device is an Internet of things IoT device.

A fourth aspect of this application provides a computer device. The computer device includes: a configuration unit, configured to respond to a first system call triggered by a first process, and configure a first access permission with which the first process accesses physical memory address space of a first system service process, where the physical memory address space stores a second function, the second function is a function that implements a functionality of the first system service process, and the first system call instructs a kernel to configure the first access permission; and a sending unit, configured to send indication information to the first process. The indication information indicates whether the first access permission is enabled, and the first access permission is used by the first process to execute the second function in the physical memory address space.

Optionally, in a possible implementation of the fourth aspect, the configuration unit is specifically configured to configure the first access permission when it is determined that the first process has a second access permission and the first access permission is not enabled. The indication information specifically indicates that the first access permission is enabled. The second access permission is a permission for calling the second function.

Optionally, in a possible implementation of the fourth aspect, the configuration unit is further configured to respond to a second system call triggered by the first process, and cancel the first access permission. The second system call instructs the kernel to cancel the first access permission.

Optionally, in a possible implementation of the fourth aspect, the first access permission includes a read and execute permission for a code segment in the first system service process and a read and write permission for a data segment in the first system service process. The first system call is further used to trigger the kernel to configure a read and execute permission for a code segment in the first process and a read and write permission for a data segment in the first process.

Optionally, in a possible implementation of the fourth aspect, the first process is a user process or a second system service process.

Optionally, in a possible implementation of the fourth aspect, the first system service process integrates at least two subsystem service processes in user mode. The subsystem service process is a driver process, a network management process, or a file system management process. When it is determined that the first process has the second access permission and the first access permission is enabled, the indication information indicates that the first access permission is enabled, and indicates a first function not to enable the second system call. The first function is a function readable and executable for all processes in the user mode. The first function is used to trigger the first system call, call the second function, and trigger the second system call. The second system call instructs the kernel to cancel the first access permission.

Optionally, in a possible implementation of the fourth aspect, the computer device uses a microkernel architecture. The first system service process is a driver process, a network management process, or a file system management process.

Optionally, in a possible implementation of the fourth aspect, the physical memory address space is address space managed by memory management unit MMU hardware, memory protection unit MPU hardware, or physical memory protection PMP hardware.

Optionally, in a possible implementation of the fourth aspect, the computer device is an Internet of things IoT device.

A fifth aspect of this application provides a computer device. The computer device performs the method according to any one of the first aspect or the possible implementations of the first aspect, or performs the method according to any one of the second aspect or the possible implementations of the second aspect.

A sixth aspect of this application provides a computer device, including a processor. The processor is coupled with a memory. The memory is configured to store a program or instructions. When the program or the instructions is/are executed by the processor, the computer device is enabled to implement the method according to any one of the first aspect or the possible implementations of the first aspect, or the computer device is enabled to implement the method according to any one of the second aspect or the possible implementations of the second aspect.

A seventh aspect of this application provides a communication system architecture. The communication system architecture includes the first process according to any one of the first aspect or the possible implementations of the first aspect, and/or the kernel according to any one of the second aspect or the possible implementations of the second aspect.

An eighth aspect of this application provides a computer-readable medium. The computer-readable medium stores a computer program or instructions. When the computer program or the instructions is/are run on a computer, the computer is enabled to perform the method according to any one of the first aspect or the possible implementations of the first aspect, or the computer is enabled to perform the method according to any one of the second aspect or the possible implementations of the second aspect.

A ninth aspect of this application provides a computer program product. When the computer program product is executed on a computer, the computer is enabled to perform the method according to any one of the first aspect or the possible implementations of the first aspect, or the method according to any one of the second aspect or the possible implementations of the second aspect.

For technical effects achieved in any one of the third aspect, the fifth aspect, the sixth aspect, the seventh aspect, and the eighth aspect or the possible implementations thereof, refer to the technical effects achieved in any one of the first aspect or the different possible implementations of the first aspect. Details are not described again.

For technical effects achieved in any one of the fourth aspect, the fifth aspect, the sixth aspect, the seventh aspect, and the eighth aspect or the possible implementations thereof, refer to the technical effects achieved in any one of the second aspect or the different possible implementations of the second aspect. Details are not described again.

It can be learned from the foregoing technical solutions that embodiments of this application have the following advantages. The first function readable and executable for all processes in the user mode is used, so that the first process may remotely call, according to the first function, the second function stored in the physical memory address space of the first system service process. In this way, the first process executes the second function. In comparison with a conventional technology in which an IPC-based function calling manner requires context switching and data copying, in embodiments of this application, context switching and data copying are not required when the first process calls the second function of the first system service process. From a mechanism logic level, this improves performance of calling the second function of the first system service process. In addition, it is specified that the first function is needed for the first process to execute the second function, and a scenario in which the first process executes the second function is limited. Alternatively, it is understood as that the first process needs to execute the second function in a public area (in other words, the first function readable and executable for all processes are stored). This reduces security risks that are caused when a user unconditionally executes the second function.

### BRIEF DESCRIPTION OF DRAWINGS

FIG. 1 is a schematic diagram of a structure of a microkernel architecture according to an embodiment of this application;
FIG. 2 is a schematic diagram of a structure of a system architecture according to an embodiment of this application;
FIG. 3 is a schematic flowchart of an inter-process function calling method according to an embodiment of this application;
FIG. 4 is a schematic diagram of a plurality of cases of indication information according to an embodiment of this application;
FIG. 5 is a schematic flowchart of a design phase according to an embodiment of this application;
FIG. 6 is another schematic flowchart of the design phase according to an embodiment of this application; and
FIG. 7 to FIG. 9 are schematic diagrams of structures of a computer device according to embodiments of this application.

### DESCRIPTION OF EMBODIMENTS

Embodiments of this application provide an inter-process function calling method and a related device, to improve efficiency with which a first process executes a function of a system service process.

The following describes embodiments of this application with reference to the accompanying drawings. It is clear that the described embodiments are merely a part rather than all of embodiments of this application. A person of ordinary skill in the art may know that with development of technologies and emergence of a new scenario, the technical solutions provided in embodiments of this application are also applicable to similar technical problems. In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases. Only A exists, both A and B exist, and only B exists. In addition, in the descriptions of embodiments of this application, "a plurality of" means two or more.

In the following, terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise stated, "a plurality of" means two or more than two.

For ease of understanding of the technical solutions provided in this application, the following first describes some concepts.

### 1. Microkernel and monolithic kernel

The microkernel is an operating system kernel architecture, represented by QNX, seL4, fuchsia, and the like. Most system services are run in user mode as independent processes, to implement "miniaturization" of the kernel.

The monolithic kernel is an operating system kernel architecture, represented by Linux, Unix, and the like. All system service functions are integrated in the kernel to implement a large and comprehensive "monolithic" kernel.

### 2. Program and process

The program is a set of instructions and data. The program may be stored in a disk as an object file, or stored in memory address space as a segment. The process is a running instance of a program. In other words, a program is a description of instructions, data and organizational forms thereof, and a process is an instance of a running program. One process may have a plurality of threads concurrently, and the threads execute different tasks concurrently. A thread may be an actual operation unit of a process. Different threads in one process differ from each other in switching statuses. For example, a thread X of a process A is in a "switched" state, and a thread Y of the same process may be in a "non-switched" state or a "switched" state. Alternatively, it is understood as that in embodiments of this application, a first task is described from a perspective of a process.

A system program means a system that controls and coordinates a computer device and a peripheral device, and supports the development and running of application software. The system program is a set of various programs that does not require user intervention.

An application corresponds to system software, and is a set of various programming languages that may be used by a user and programs compiled in various programming languages. Applications are divided into an application software package and a user program.

### 3. Memory protection unit (memory protection unit, MPU) and physical memory protection (physical memory protection, PMP)

The MPU is a kind of hardware configured in an ARM to effectively protect system resources, and provides memory area protection. The MPU allows privileged software (for example, the operating system) to define areas in a memory and allocate access permissions and attributes to these areas. The MPU monitors transactions between a central processing unit (central processing unit, CPU) and the memory and issues an alert (triggering a fault) when an access violation is detected. The main purpose of the MPU is to prevent a program from accessing a memory that is not allocated to the program. This may prevent innocent errors in common programs or malware programs from affecting other processes or the operating system.

The functions of the PMP and MPU are the same. The MPU is used in an ARM architecture, and the PMP is used in a risc-V architecture.

### 4. Memory management unit (memory management unit, MMU)

The MMU is mainly used to manage control lines of a virtual memory and a physical memory, and is also responsible for mapping a virtual address to a physical address and providing a memory access permission and a multitasking/multi-processing operating system of the hardware mechanism.

The MMU provides a more powerful memory protection mechanism than the MPU. The MPU provides only memory area protection, and the MMU provides memory area protection and the virtual address mapping technology. In addition, the MMU is more complex than the MPU in terms of operation.

### 5. System call

The system call is a set, namely, an application interface or an application programming interface (application programming interface, API), including all system calls implemented and provided by an operating system. The system call is an interface between an application and a system, and may also be understood as an interface provided by a kernel for a user process.

### 6. Kernel mode and user mode

The kernel mode and the user mode are two working states of a central processing unit (central processing unit, CPU). If a process executes a system call to execute kernel code, the process is in kernel mode. If a process executes user code, the process is in user mode. The kernel mode may also be referred to as privileged mode, and the user mode may also be referred to as a non-privileged mode. The following uses the kernel mode and the user mode for description.

Specifically, in the ARM architecture, EL0 indicates the user mode, and EL1 indicates the kernel mode. In the X86 architecture, ring3 indicates the user mode, and ring0 indicates the kernel mode.

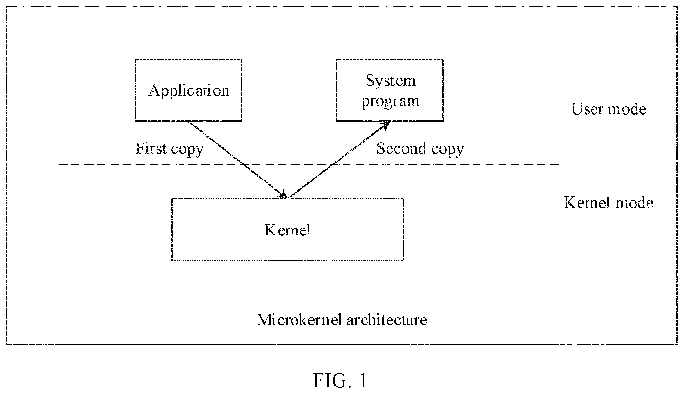

As shown in FIG. 1, in an existing microkernel architecture, an application and a system program are separately run in user mode as independent processes. A kernel is run in kernel mode, and the application needs to access the system program through the kernel. However, because the application and the system program are isolated from each other, the system program cannot access physical memory address space of the application. Consequently, the microkernel architecture has poor performance.

In the microkernel architecture, a user process communicates with a system service process through IPC, to implement security isolation between processes. When the user process needs to call a function of the system service process, the user process sends input parameter data of the function to the system service process through IPC. In this procedure, the input parameter data is copied. Generally, the input parameter data is copied two times. At the first time, the input parameter data is copied from the user process to a kernel data segment. At the second time, the input parameter data is copied from the kernel data segment to a data segment in the system service process. In this way, the system service process runs the function based on the input parameter data.

However, the foregoing manner of calling a function based on IPC increases overheads as an amount of input data increases. This affects device performance.

To resolve the problem, this application provides an inter-process function calling method. A first function readable and executable for all processes in user mode is used, so that a first process may remotely call a second function stored in physical memory address space of a first system service process. In this way, the first process executes the second function. In comparison with a conventional technology in which an IPC-based function calling manner requires context switching and data copying, in embodiments of this application, process switching, context switching, and data copying are not required when the second function of the first system service process is called. From a mechanism logic level, this improves performance of calling a function of the first system service process.

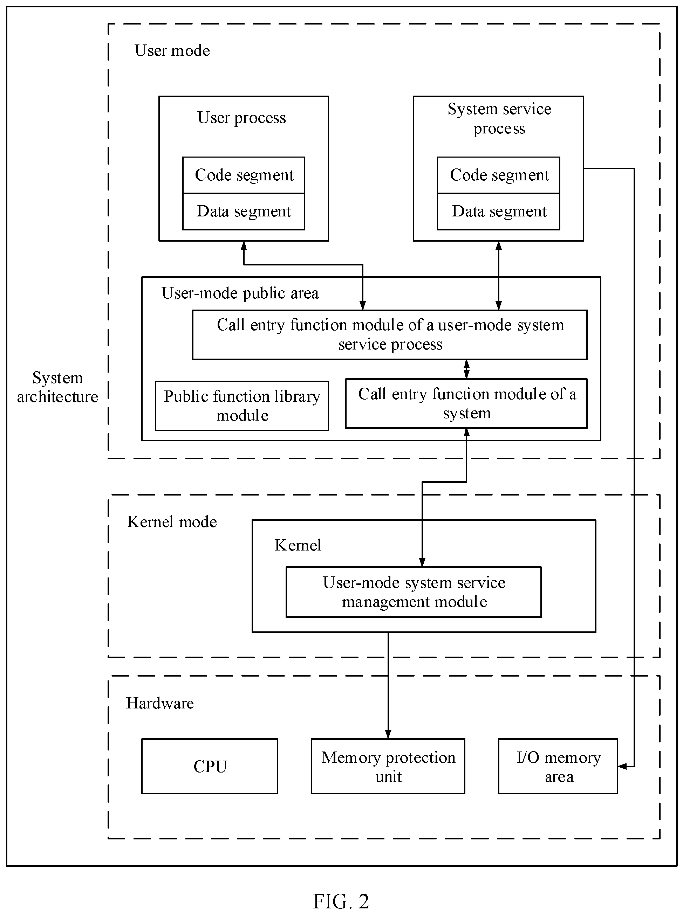

First, the following describes a system architecture according to an embodiment of this application. As shown in FIG. 2, a system architecture according to an embodiment of this application includes a first process, a first system service process, a user-mode public area, a kernel, and hardware.

The first process includes a code segment and a data segment, and the first system service process includes a code segment and a data segment. A data segment may be understood as a concept corresponding to a code segment. The data segment is typically a data segment, a read-only data segment, and a block started by symbol (block started by symbol, BSS) segment. The read-only data segment is used to store initialized (non-zero) global variables and static local variables in a program (a first program or a first system service program). The starting position of the data segment is determined by using a linkage location file, and the size is automatically allocated during compilation and linking. The BSS segment is a memory area used to store uninitialized global and static variables in the program. The code segment is mapped into a read-only and executable address. This is calculated automatically by a compiler during compilation and linking. The code segment is usually used to store instructions executed by a program (the first program or the first system service program).

In this embodiment of this application, the first process may be a user process, or may be a second system service process. The first system service process and the second system process may include a driver process, a network management process, a file system management process, or a memory management process. This is not specifically limited. Further, the first system service process and the second system service process (for example, a driver process, a network management process, and a file system management process) may be of a same type or different types. For example, both the first system service process and the second system service process may be driver processes. For another example, the first system service process is a network management process, and the second system service process is a driver process.

The user-mode public area means an area in which all processes in the user mode can perform reading and execution. The user-mode public area includes: a call entry function module of a first system service process, a call entry function module of a system, and a public function library module. The call entry function module of the first system service process is used to store a call entry function corresponding to the first system service process. The call entry function is used to call a system to instruct a kernel to configure or cancel a permission with which the first process accesses physical memory address space of the first system service process, and is further used to call a system service function stored in the physical memory address space of the first system service process. The public function library module is used to provide a public function for a user-mode process. For example, the public function library includes at least one of a libc library (for example, a glibc library or a musl libc library) or a posix library.

A kernel is the core of an operating system and is used to manage system resources. A user-mode system service management module in the kernel is mainly used to configure an access permission for the physical memory address space of the first system service process based on a current status of the first system service process. Based on a permission of the first process, switching is performed on the permission for the physical memory address space of the first system service process (namely, switching between enabling and disabling of the permission).

Hardware includes a CPU and a memory protection unit (MPU/PMP). The memory protection unit is mainly configured to set a read/write feature of a physical memory. Alternatively, it is understood as setting an access permission for the physical memory address space. Alternatively, the memory protection unit may be an MMU with reduced functions. This is not specifically limited. In addition, if the first system service process is a driver process, the hardware may further include an input/output (input/output, I/O) memory area, and the I/O memory area is a memory area corresponding to an input/output device.

Optionally, system services of a same type are located in one system service process. For example, the first system service process is a driver process. The driver process may include one or more drivers, or may include code of all user-mode drivers. When the driver process includes one driver, it may be understood as that the system architecture is a microkernel system architecture. In addition, one part of the driver system service may be in a user-mode driver process, and the other part of the driver system service may be in a kernel. In this case, it may be understood as that the system architecture is a hybrid kernel system architecture. For example, the driver system service includes a USB driver, a serial port driver, and a network driver. In this case, the USB driver and the serial port driver may be represented as processes in user mode, and the network driver may be put in system management of the kernel. It may be understood that an example in which the driver system service includes three drivers is used for description. Certainly, in this case, when the first process is the second system service process, because the system services of a same type are located in one system service process, the second system service process and the first system service process are system service processes of different types.

Because the memory protection unit protects and restricts the first system service process, the first process cannot directly call a function of the first system service process or access data in the first system service process. In this embodiment of this application, the system call entry function is introduced. After a user-mode system service management module in the kernel performs a permission switch, the first process may remotely call and execute a system service function of the first system service process.

The communication architecture according to embodiments of this application may be used in platforms using a plurality of architectures, such as an Intel architecture, an ARM architecture, an AARCH64 architecture, or a Risc-V architecture. In the architecture, for a chip that supports a memory protection unit (MPU/PMP) and supports user mode and kernel mode, the following advantages are more obvious. In addition, the architecture is also suitable for a small operating system that is run based on a real address.

In one aspect, the first process may execute the system service function of the first system service process according to an entry function for a remote call. This reduces extra overheads caused by a process switch or data copying in the conventional technology. In another aspect, because the entry function for a remote call is located in the user-mode public area, and may be read and executed by all processes in the user-mode, to ensure that when the entry function is called, a system call does not cause a code segment unreadable and a processing anomaly does not occur. In still another aspect, the system management module in the kernel may configure the access permission for the physical memory address space of the first system service process, to ensure security isolation between the first process and the first system service process.

The following describes an inter-process function calling method according to an embodiment of this application in detail with reference to the system architecture of FIG. 2 and the accompanying drawings.

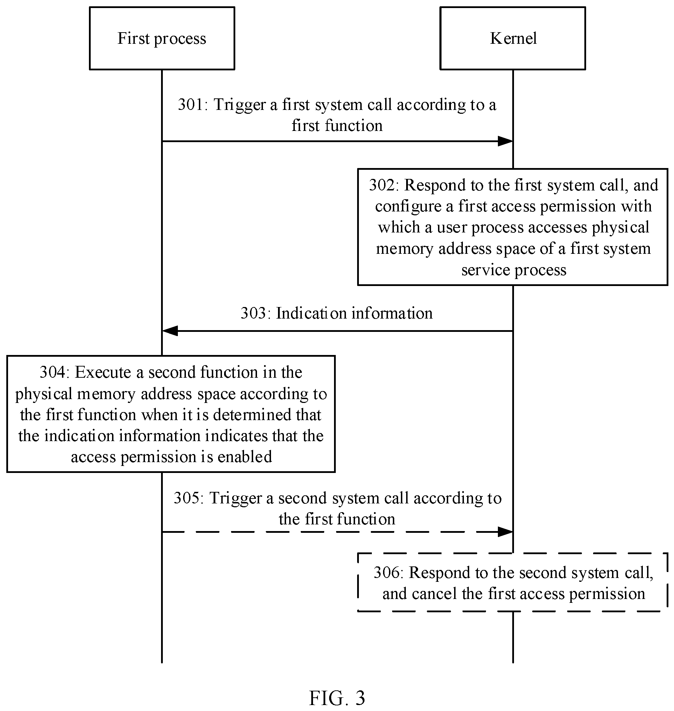

Refer to FIG. 3, which shows an embodiment of an inter-process function calling method according to an embodiment of this application. The method may be used in a computer device, or may be used in a component (such as a processor, a chip, or a chip system) of the computer device. This embodiment includes step 301 to step 306.

In this embodiment of this application, the computer device may be a terminal device configured to serve a user or a cloud device. The terminal device may be an Internet of things (Internet of things, IoT) device, for example, including a head-mounted display (head-mounted display, HMD), where the head-mounted display may be a combination of a virtual reality (virtual reality, VR) box and a terminal, an all-in-one VR headset, a personal computer (personal computer, PC), an augmented reality (augmented reality, AR) device, a mixed reality (mixed reality, MR) device, or the like. The terminal device may alternatively include a smartphone (smartphone), a personal digital assistant (personal digital assistant, PDA), a tablet computer, a laptop computer (laptop computer), a personal computer (personal computer, PC), a vehicle-mounted terminal, an earphone, a smart watch, an instrument, a camera, or the like. This is not specifically limited.

Step 301: A first process triggers a first system call according to a first function.

The first process in this embodiment of this application may be a user process, or may be a second system service process. This is not specifically limited. For a relationship between a first system service process and the second system service process, refer to the descriptions for the architecture shown in FIG. 2. Details are not described herein again.

The first function in this embodiment of this application may be stored in the call entry function module of the user-mode system service process in the architecture shown in FIG. 2, or may be stored in an area readable and executable for all processes in the user mode. Alternatively, it is understood as that the first function is a function readable and executable for all processes in the user mode. The first function is used to trigger the first system call and call a second function of the first system service process. The first system call instructs a kernel to configure a first access permission with which the first process accesses physical memory address space of the first system service process. The physical memory address space stores the second function. The second function is a function that implements a functionality of the first system service process.

Optionally, the first system call instructs the kernel to configure a code segment and a data segment in the first system process to be readable, writable, and executable (namely, the first access permission). In addition, to ensure security of calling the second function subsequently, a data segment in the first process is configured to be readable and writable, and a code segment in the first process is configured to be unreadable and non-executable.

Optionally, the first function is written by a developer of the first system service process. Further, a developer of the first process has a read and execute permissions for the first function, but does not have a development permission. In other words, only the developer of the first system service process in which the first function is used to call the system service function has the development permission for the first function.

Although the first process cannot directly modify the first access permission for the physical memory address space by modifying a register of a memory protection unit, the kernel may modify the first access permission with which the memory protection unit accesses the physical memory address space. Therefore, the first process may configure the first access permission by using the first system call according to the first function.

Optionally, if the first process is a user process, the first function may alternatively be understood as a function called by an application function of the first process. That a first process triggers a first system call according to a first function may be understood as that the first process executes the application function of the first process, and the application function calls the first function to trigger the first system call.

Optionally, the first process obtains a first task input by a user. The first task is that the first process executes the second function. After obtaining the first task, the first process triggers an application function corresponding to the first task in the first process to call the first function, and calls the first system call first after entering the first function.

Step 302: The kernel responds to the first system call, and configures the first access permission with which the first process accesses the physical memory address space of the first system service process.

After the user process triggers the first system call, because the first system call instructs the kernel to configure the first access permission with which the first process accesses the physical memory address space of the first system service process, the kernel responds to the first system call and configures the first access permission. The first access permission may include that the code segment and the data segment in the first system process are configured to be readable, writable, and executable.

Optionally, that the kernel configures the first access permission includes: The kernel may set the code segment in the first system service process to be readable and executable, and set the data segment in the first system service process to be readable and writable. In addition, to ensure security of calling the second function, the code segment in the first process may be configured to be unreadable and non-executable.

Optionally, if the first system service process is a driver process, the kernel may further configure a corresponding I/O memory area in FIG. 2 to a readable and writable state, to facilitate access of an external device.

Optionally, to ensure system security, after the user process triggers the first system call, the kernel may perform authorization on the first process (in other words, determining whether the user process has a second access permission). The kernel configures the first access permission if the first process has the second access permission and the first access permission is not enabled. The second access permission may be understood as a calling permission that is for the second function and that is set by the developer of the first system service process in a design phase.

Optionally, the authorization may be performed based on 32-bit information set by a third developer. Bits of the information indicate whether different processes have the second access permission, where 1 indicates that a process has the second access permission, and 0 indicates that a process does not have the second access permission.

Step 303: The kernel sends indication information to the first process. Correspondingly, the first process receives the indication information sent by the kernel.

After the kernel configures the first access permission with which the first process accesses the physical memory address space of the first system service process, the kernel may send the indication information to the first process. There are a plurality of cases of the indication information. The following separately describes the cases.

A first case: The indication information indicates that the first access permission is enabled.

This manner may be understood as that the kernel has configured the first access permission, and time for the configuration may be after the first system call is received, or may be before the first system call is received. This is not specifically limited. If the indication information indicates that the first access permission is enabled, step 304 is performed.

Optionally, this manner may be understood as that the first process has the second access permission, and the kernel has enabled the first access permission. Thus, the indication information indicates that the first access permission is enabled.

In addition, if the time for configuring the first access permission is before the first process triggers the first system call, the indication information indicates that the first access permission is enabled, and may also indicate the first function not to enable the second system call. This manner is used in a situation in which the first system service process integrates at least two subsystem service processes (a driver process, a network management process, a file system management process, or the like). In other words, a third function is nested in the second function, and an attribute of the third function is the same as that of the first function (for example, the third function is also a function readable and executable for all processes in the user mode, and the third function is used to trigger the first system call and the second system call). After the third function is executed, the first access permission does not need to be canceled before the first process returns to the first function, because the first access permission is further needed for executing the second function. The indication information further indicates the first function not to enable the second system call, to avoid repeatedly enabling and disabling the first access permission. It may alternatively be understood as that before the first process returns to the first function, the first access permission remains unchanged.

The manner may alternatively be understood as that in a nesting scenario, after the third function is executed, the first process needs to return to the first function. To avoid a plurality of system calls in one thread task (namely, enabling the first access permission, disabling the first access permission, enabling the first access permission again, and disabling the first access permission again), when an execution domain (namely, physical memory address space in which the task is performed) remains unchanged, the first access permission does not need to be changed.

The manner is alternatively understood as that in a scenario in which there are nested functions (that is, one function includes another function) and the nested functions are in same physical memory address space, a system call does not need to be performed before a function is executed and another system call does not need to be performed after the function is executed (one system call is used for enabling the access permission, and the other system call is used for canceling the access permission). On the one hand, energy consumption caused by a plurality of system calls is reduced. On the other hand, efficiency with which the nested functions are executed is improved.

A second case: The indication information indicates that the first access permission is not enabled.

This manner may be understood as that the kernel does not configure the first access permission. If the indication information indicates that the first access permission is not enabled, the first process returns to the first function.

Optionally, this manner may alternatively be understood as that the first process does not have the second access permission (refer to the preceding descriptions, and details are not described again). Thus, the indication information indicates that the first access permission is not enabled, or indicates that the first process does not have the second access permission.

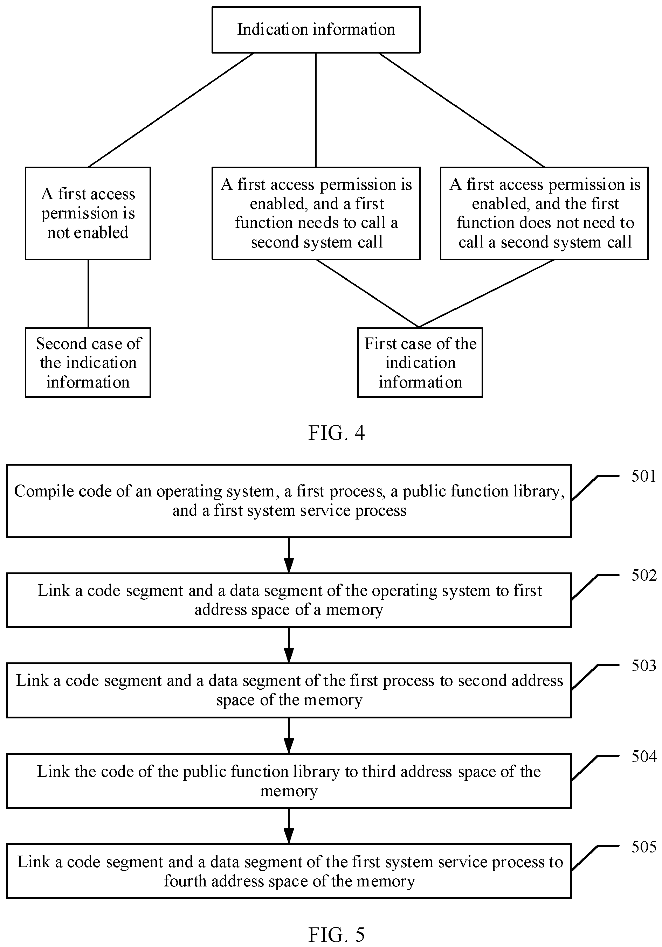

Optionally, for a plurality of cases of the indication information in this step, refer to FIG. 4. The indication information includes the first case and the second case. The second case may be further divided into two sub-cases. One sub-case is that the first access permission is enabled, and the first function needs to call the second system call (or it is understood as that the permission needs to be disabled). The other sub-case is that the permission is enabled, and the first function does not need to call the second system call (or it is understood as the situation of the nested functions and the permission does not need to be disabled).

Step 304: The first process executes the second function in the physical memory address space according to the first function when it is determined that the indication information indicates that the first access permission is enabled.

The first process may execute, according to the first function, the second function stored in the physical memory address space of the first system service process when it is determined that the indication information indicates that the first access permission is enabled, in other words, indicating that the first process has the permission to access the physical memory address space of the first system service process. The second function is a function that implements a functionality of the first system service process.

This step may alternatively be understood as that the first process returns to the first function after the first system call ends. In addition, because the first process has the first access permission, the first process jumps to the second function and executes the second function.

Optionally, that the first process executes the second function may be understood as that the first process executes the first task. The first task includes that the first process executes the second function, or the first task needs to be completed by executing the second function.

Optionally, if the first process is the user process, and the first system service process is the network management process, a functionality of the second function is to receive/send network data. If the first process is the user process, and the first system service process is the file system management process, a functionality of the second function is to read and write a file. If the first process is the user process, and the first system service process is the driver process, a functionality of the second function is to support the I/O device.

Step 305: The first process triggers the second system call according to the first function. This step is optional.

Optionally, the first process may trigger the second system call according to the first function after executing the second function. The second system call instructs the kernel to cancel the first access permission.

This step may alternatively be understood as that the first process returns to the first function after the second function is executed, and the second system call is triggered subsequently.

Step 306: The kernel responds to the second system call, and cancels the first access permission. This step is optional.

After the first process triggers the second system call, the kernel responds to the second system call and cancel the first access permission.

Optionally, if that the first system call triggers the kernel to configure the first access permission includes that the kernel may set the code segment and the data segment in the first system service process to be readable, writable, and executable, set the data segment in the first process to be readable and writable, and set the code segment in the first process to be readable and non-executable, the second system call is used to cancel the first access permission. Alternatively, it is understood as that the code segment and the data segment in the first system process are set to unreadable, unwritable, and non-executable. Further, the data segment in the first process is set to be readable and writable, and the code segment in the first process is set to be readable and non-executable.

Optionally, after the second system call is completed, the first process returns to the first function. Further, if the first process is the user process, the first process returns to the application function used to call the first function.

In a possible implementation, the inter-process function calling method according to this embodiment of this application may include step 301 to step 304. In another possible implementation, the inter-process function calling method according to this embodiment of this application may include step 301 to step 306.

Optionally, before the embodiment shown in FIG. 3 is performed, whether the first task obtained by the user process meets a first condition may be determined first. If the first condition is met, the embodiment shown in FIG. 3 is performed. The first condition may be understood as whether the first task is in the first process. If the first task is in the first process, the embodiment shown in FIG. 3 is performed. If the first task is in the kernel mode or in a system service process in the user mode, the kernel sends to the first process the indication information of the first case in step 303. The indication information indicates that the access permission is enabled, and may also indicate the first function not to enable the second system call. In other words, the process in which the task is located has the permission to access to the physical memory address space. A system call does not need to be performed, and this avoids overheads.

In embodiments of this application, the first function readable and executable for all processes in the user mode is used, so that the first process may remotely call, according to the first function, the second function stored in the physical memory address space of the first system service process. In this way, the first process executes the second function. In comparison with a conventional technology in which an IPC-based function calling manner requires context switching and data copying, in embodiments of this application, context switching and data copying are not required when the second function of the first system service process is called. From a mechanism logic level, this improves performance of calling a function of the first system service process. In addition, in the scenario in which there are the nested functions (that is, one function includes another function) and the nested functions are in same physical memory address space, a system call does not need to be performed before a function is executed and another system call does not need to be performed after the function is executed (one system call is used for enabling the access permission, and the other system call is used for canceling the access permission). On the one hand, energy consumption caused by a plurality of system calls is reduced. On the other hand, efficiency with which the nested functions are executed is improved. In addition, it is specified that the first function is needed for the first process to execute the second function, and a scenario in which the first process executes the second function is limited. Alternatively, it is understood as that the first process needs to execute the second function in a public area (in other words, the first function readable and executable for all processes are stored). This reduces security risks that are caused when a user unconditionally executes the second function.

In addition, in a design phase, the following steps in FIG. 5 may be used to enable the first process to remotely call, according to a first function, a second function stored in physical memory address space of a system service process.

Step 501: Compile code of an operating system, a first process, a public function library, and a first system service process.

For descriptions of the first process in this embodiment, refer to the descriptions in the embodiment shown in FIG. 3. Details are not described again. This embodiment only describes an example in which the first process is a user process.

A first developer compiles code of the operating system, a second developer compiles code of the first process, a third developer compiles code of the first system service process, and a fourth developer compiles code of the public function library. In addition, a remote call entry library in the public function library is designed by the third developer corresponding to the first system service process, or is understood as an entry provided by the third developer for the first process to call a second function.

Optionally, the third developer develops code of an entry function for a remote call, and the first function is compiled and linked to the public function library of the system. Further, to ensure security isolation, each process is developed by each developer, but there is a unified code template, facilitate unified function calling procedures of all processes.

Compilation in this embodiment of this application means converting a file into a binary file. Linking is a procedure of putting code segments together, putting data segments together, or is understood as a procedure of combining code segments or data segments. Compilation and linking may isolate the first process, the first system service process, and the kernel from each other. If system services of one type are represented by one process, for example, all drivers are represented by one driver process, the drivers in the driver process are not isolated from each other.

Step 502: Link a code segment and a data segment of the operating system to first address space of a memory.

The first developer links the code segment and the data segment of the operating system to the first address space of the memory.

Further, in the address space (the first address space, second address space, third address space, and fourth address space) in this embodiment of this application includes a code area and a data area. The code area is used to store a code segment, and the data area is used to store a data segment. Alternatively, it is understood as that the code segment and the data segment are separated in the address space.

Step 503: Link a code segment and a data segment of the first process to the second address space of the memory.

The second developer links the code segment and the data segment of the first process to the second address space of the memory.

Step 504: Link the code of the public function library to the third address space of the memory.

The fourth developer links the code of the public function library to the third address space of the memory. The third developer compiles an entry function for a remote call corresponding to the first system service process and links the entry function for a remote call to the public function library.

Step 505: Link a code segment and a data segment of the first system service process to the fourth address space of the memory.

The third developer links the code segment and the data segment of the first system service process to the fourth address space of the memory.

Optionally, when developing the first system service process, the third developer may specify which processes have the permission (namely, the second access permission in the embodiment shown in FIG. 3) to call the entry function for a remote call, and the permission cannot be modified in a procedure of running the first system service process. This ensures that the process having the second access permission can be successfully authorized in the embodiment shown in FIG. 3.

Optionally, the third developer uses 32-bit information to indicate whether each process has the second access permission, where 1 indicates that the process has the access permission, and 0 indicates the access does not have the access permission.

Developers in this embodiment may be the same person or different people. For example, an application (APP) and a driver produced by one manufacturer may be developed and designed by one developer. Certainly, to ensure that the processes are isolated from the kernel and the processes are isolated from each other, the first developer, the second developer, the third developer, and the fourth developer in this application may be different developers.

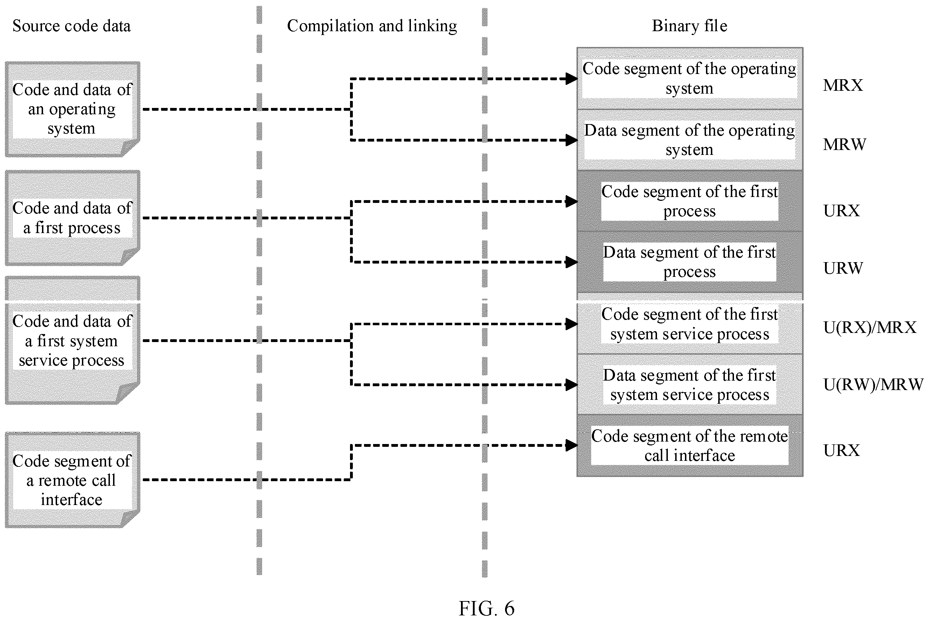

For example, FIG. 6 is another schematic diagram of the embodiment shown in FIG. 5. The code segment of the operating system is kernel-mode readable and executable (machine mode readable executable, MRX), and the data segment of the operating system is kernel-mode readable and writable (machine mode readable writable, MRW). The code segment of the first process is a user-mode readable and executable (user mode readable executable, URX), and the data segment of the first process is user-mode readable and writable (user mode readable writable, URW). The code segment of the first system service process is URX and MRX. The data segment of the first system service process is URW and MRW. The code segment of a remote call interface (namely, the entry function for a remote call) is URX.

In this embodiment, the entry function for a remote call (this may be understood as the first function in the embodiment shown in FIG. 3) that is designed by the third developer for another process to call the second function is used, so that the first process may call, according to the entry function for a remote call, the second function stored in the physical memory address space of the first system service process. In this way, the first process executes the second function. In comparison with a conventional technology in which an IPC-based function calling manner requires context switching and data copying, in embodiments of this application, context switching and data copying are not required when the second function of the first system service process is called. From a mechanism logic level, this improves performance of calling a function of the first system service process. In addition, it is specified that the first function is needed for the first process to execute the second function, and a scenario in which the first process executes the second function is limited. Alternatively, it is understood as that the first process needs to execute the second function in a public area (in other words, the first function readable and executable for all processes are stored). This reduces security risks that are caused when a user unconditionally executes the second function.

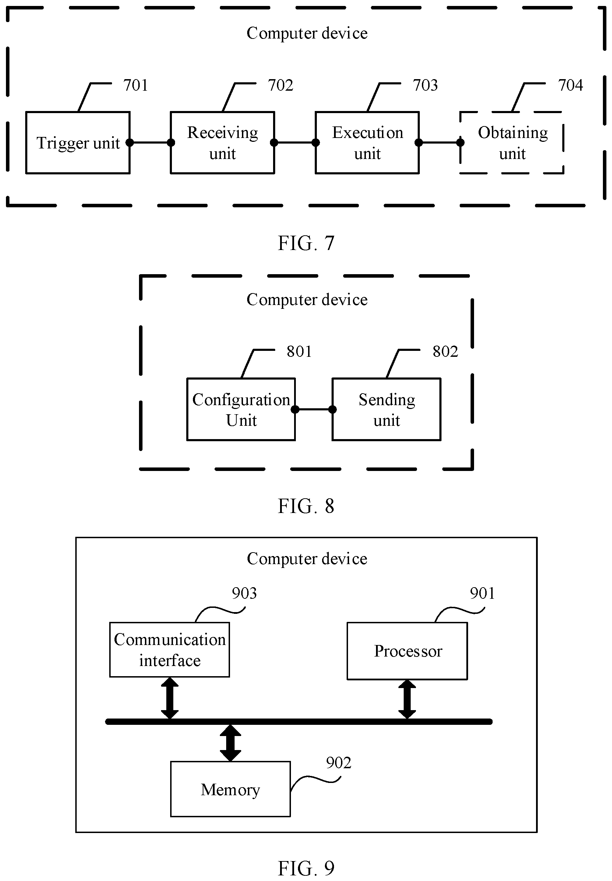

The foregoing describes a processing method for system configuration in embodiments of this application. The following describes a computer device in this embodiment of this application. Refer to FIG. 7. In this embodiment of this application, according to an embodiment, a computer device includes:
a trigger unit 701, configured to trigger a first system call according to a first function, where the first function is a function readable and executable for all processes in user mode, the first function is used to trigger the first system call and call a second function of a first system service process, the first system call instructs a kernel to configure a first access permission with which the first process accesses physical memory address space of the first system service process, the physical memory address space stores the second function, and the second function is a function that implements a functionality of the first system service process;
a receiving unit 702, configured to receive indication information that is sent by the kernel and that is used to respond to the first system call, where the indication information indicates whether the first access permission is enabled; and
an execution unit 703, configured to execute the second function in the physical memory address space according to the first function when it is determined that the indication information indicates that the first access permission is enabled.

Optionally, the computer device may further include an obtaining unit 704, configured to obtain a first task. The first task includes that the first process executes the second function.

In this embodiment, operations performed by units in the computer device are similar to those described in embodiments shown in FIG. 2 to FIG. 6. Details are not described again.

In this embodiment, the first function readable and executable for all processes in the user mode is used, so that the execution unit 703 may implement the following: the first process may remotely call, according to the first function, the second function stored in the physical memory address space of the first system service process. In this way, the first process executes the second function. In comparison with a conventional technology in which an IPC-based function calling manner requires process switching and data copying, in embodiments of this application, process switching and data copying are not required when the first process calls the second function of the first system service process. From a mechanism logic level, this improves performance of calling the second function of the first system service process.

Refer to FIG. 8. In this embodiment of this application, according to another embodiment, a computer device include:
a configuration unit 801, configured to respond to a first system call triggered by a first process, and configure a first access permission with which the first process accesses physical memory address space of a first system service process, where the physical memory address space stores a second function, the second function is a function that implements a functionality of the first system service process, and the first system call instructs a kernel to configure the first access permission; and
a sending unit 802, configured to send indication information to the first process. The indication information indicates whether the first access permission is enabled, and the first access permission is used by the first process to execute the second function in the physical memory address space according to the first function.

In this embodiment, operations performed by units in the computer device are similar to those described in embodiments shown in FIG. 2 to FIG. 6. Details are not described again.

In this embodiment, the configuration unit 801 may respond to the system call triggered by the first process and configure the first access permission, and the sending unit 802 sends the indication information to indicate that the first access permission is enabled. Thus, the first process may call and execute, based on the first access permission, the second function stored in the physical memory address space of the first system service process. In comparison with a conventional technology in which an IPC-based function calling manner requires process switching and data copying, in embodiments of this application, process switching and data copying are not required when the first process calls the second function of the first system service process. From a mechanism logic level, this improves performance of calling the second function of the first system service process.

FIG. 9 is a schematic diagram of a structure of another computer device according to this application. The computer device may include a processor 901, a memory 902, and a communication interface 903. The processor 901, the memory 902, and the communication interface 903 are interconnected by using a line. The memory 902 stores program instructions and data.

The memory 902 stores program instructions and data corresponding to the steps performed by the computer device in a corresponding implementation shown in FIG. 2 to FIG. 6. For embodiments shown in FIG. 2 to FIG. 4, the memory 902 includes the physical memory address space corresponding to the first system service process. For the embodiment in FIG. 5, the memory 902 includes the first address space, the second address space, the third address space, and the fourth address space. For descriptions of the address space, refer to the descriptions in the embodiment shown in FIG. 5. Details are not described again.

The processor 901 is configured to perform the steps performed by the computer device in any one of embodiments shown in FIG. 2 to FIG. 6.

The communication interface 903 may be configured to receive and send data, and is configured to perform steps related to obtaining, sending, and receiving in any one of embodiments shown in FIG. 2 to FIG. 6.

In an implementation, the computer device may include more or fewer components than those in FIG. 9. This is merely an example for description in this application, and is not limited.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit. All or some of the foregoing integrated units may be implemented by using software, hardware, firmware, or any combination thereof.

When software is used to implement the integrated units, all or a part of the integrated units may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another web site, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (Solid State Disk, SSD)), or the like.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

## Claims

1. An inter-process function calling method, wherein the method is used in a computer device, and the method comprises:
triggering (301), by a first process, a first system call according to a first function, wherein
the first function is a function readable and executable for processes in user mode,
the first function is used to trigger the first system call and call a second function of a first system service process, the first system call instructs a kernel to configure (302) a first access permission with which the first process accesses physical memory address space of the first system service process,
the physical memory address space stores the second function, and
the second function is a function that implements a functionality of the first system service process; receiving (303), by the first process, indication information that is sent by the kernel and that is used to respond to the first system call,
wherein the indication information indicates whether the first access permission is enabled; and executing (304), by the first process, the second function according to the first function when it is determined that the indication information indicates that the first access permission is enabled.

2. The method according to claim 1, wherein the first function is further used to trigger (305) a second system call, and the second system call is used by the kernel to cancel the first access permission; and
after the executing, by the first process, the second function, the method further comprises:
triggering, by the first process, the second system call according to the first function, wherein the second system call instructs the kernel to cancel the first access permission.

3. The method according to claim 1 or 2, wherein the first access permission comprises a read and execute permission for a code segment in the first system service process and a read and write permission for a data segment in the first system service process, and the first system call is further used to trigger the kernel to configure a read and execute permission for a code segment in the first process and a read and write permission for a data segment in the first process.

4. The method according to any one of claims 1 to 3, wherein before the triggering, by a first process, a first system call according to a first function, the method further comprises:
obtaining, by the first process, a first task, wherein the first task comprises executing, by the first process, the second function.

5. The method according to any one of claims 1 to 4, wherein the first process is a user process or a second system service process.

6. The method according to any one of claims 1 to 5, wherein the first system service process integrates at least two subsystem service processes in the user mode, the subsystem service process is a driver process, a network management process, or a file system management process, the second function is a function of one subsystem service process of the at least two subsystem service processes, a third function is a function readable and executable for processes in the user mode, and the third function is used to call a function of the other subsystem service process of the at least two subsystem service processes; and
the executing, by the first process, the second function in the physical memory address space according to the first function comprises:
calling and executing, by the first process, the third function according to the second function, wherein before the first process returns to the first function, the first access permission remains unchanged.

7. An inter-process function calling method, wherein the method is used in a computer device, and the method comprises:
responding (302) to, by a kernel, a first system call triggered by a first process, and configuring a first access permission with which the first process accesses physical memory address space of a first system service process, wherein the physical memory address space stores a second function, the second function is a function that implements a functionality of the first system service process, and the first system call instructs the kernel to configure the first access permission; and sending (303), by the kernel, indication information to the first process, wherein the indication information indicates whether the first access permission is enabled, and the first access permission is used by the first process to execute the second function.

8. The method according to claim 7, wherein the configuring a first access permission with which the first process accesses physical memory address space of a first system service process comprises:
configuring, by the kernel, the first access permission when it is determined that the first process has a second access permission and the first access permission is not enabled, wherein the indication information specifically indicates that the first access permission is enabled, and the second access permission is a permission for calling the second function.

9. The method according to claim 7 or 8, wherein the method further comprises:
responding to, by the kernel, a second system call triggered by the first process, and canceling the first access permission, wherein the second system call instructs the kernel to cancel the first access permission.

10. The method according to any one of claims 7 to 9, wherein the first access permission comprises a read and execute permission for a code segment in the first system service process and a read and write permission for a data segment in the first system service process, and the first system call is further used to trigger the kernel to configure a read and execute permission for a code segment in the first process and a read and write permission for a data segment in the first process.

11. The method according to any one of claims 7 to 10, wherein the first process is a user process or a second system service process.

12. The method according to any one of claims 7 to 11, wherein the first system service process integrates at least two subsystem service processes in user mode, and the subsystem service process is a driver process, a network management process, or a file system management process; and
when it is determined that the first process has the second access permission and the first access permission is enabled, the indication information indicates that the first access permission is enabled, and indicates a first function not to enable the second system call, wherein the first function is a function readable and executable for processes in the user mode, the first function is used to trigger the first system call, call the second function, and trigger the second system call, and the second system call instructs the kernel to cancel the first access permission.

13. The method according to any one of claims 1 to 12, wherein the method is used in a microkernel architecture, and the first system service process is a driver process, a network management process, or a file system management process; and
the physical memory address space is address space managed by memory management unit MMU hardware, memory protection unit, MPU, hardware, or physical memory protection, PMP, hardware.

14. A computer device, comprising a memory and a processor, wherein the memory stores code, the processor is configured to execute the code, and when the code is executed, the computer device performs the method according to any one of claims 1 to 6 and/or the method according to any one of claims 7 to 13.

15. A computer-readable storage medium, comprising computer-readable instructions, wherein when the computer-readable instructions are run on a computer, the computer is enabled to perform the method according to any one of claims 1 to 6, and/or the method according to any one of claims 7 to 13.

## Patentansprüche

1. Verfahren zum Aufrufen einer Interprozessfunktion, wobei das Verfahren in einem Computergerät verwendet wird und das Verfahren umfasst:
Auslösen (301), durch einen ersten Prozess, eines ersten Systemaufrufs gemäß einer ersten Funktion, wobei die erste Funktion eine für Prozesse im Benutzermodus lesbare und ausführbare Funktion ist, die erste Funktion verwendet wird, den ersten Systemaufruf auszulösen und eine zweite Funktion eines ersten Systemdienstprozesses aufzurufen, der erste Systemaufruf einen Kern anweist, eine erste Zugriffsberechtigung zu konfigurieren (302), mit der der erste Prozess auf physikalischen Speicheradressraum des ersten Systemdienstprozesses zugreift, der physikalische Speicheradressraum die zweite Funktion speichert und die zweite Funktion eine Funktion ist, die eine Funktionalität des ersten Systemdienstprozesses implementiert;
Empfangen (303), durch den ersten Prozess, von Angabeinformationen, die von dem Kern gesendet werden und die verwendet werden, auf den ersten Systemaufruf zu reagieren,
wobei die Angabeinformationen angeben, ob die erste Zugriffsberechtigung aktiviert ist; und
Ausführen (304), durch den ersten Prozess, der zweiten Funktion gemäß der ersten Funktion, wenn bestimmt wird, dass die Angabeinformationen angeben, dass die erste Zugriffsberechtigung aktiviert ist.

2. Verfahren nach Anspruch 1, wobei die erste Funktion ferner verwendet wird, einen zweiten Systemaufruf auszulösen (305), und der zweite Systemaufruf von dem Kern verwendet wird, die erste Zugriffsberechtigung aufzuheben; und
das Verfahren nach dem Ausführen der zweiten Funktion durch den ersten Prozess ferner umfasst:
Auslösen, durch den ersten Prozess, des zweiten Systemaufrufs gemäß der ersten Funktion, wobei der zweite Systemaufruf den Kern anweist, die erste Zugriffsberechtigung aufzuheben.

3. Verfahren nach Anspruch 1 oder 2, wobei die erste Zugriffsberechtigung eine Lese- und Ausführungsberechtigung für ein Codesegment in dem ersten Systemdienstprozess und eine Lese- und Schreibberechtigung für ein Datensegment in dem ersten Systemdienstprozess umfasst und der erste Systemaufruf ferner verwendet wird, den Kern zu veranlassen, eine Lese- und Ausführungsberechtigung für ein Codesegment in dem ersten Prozess und eine Lese- und Schreibberechtigung für ein Datensegment in dem ersten Prozess zu konfigurieren.

4. Verfahren nach einem der Ansprüche 1 bis 3, wobei das Verfahren vor dem Auslösen eines ersten Systemaufrufs durch einen ersten Prozess gemäß einer ersten Funktion ferner umfasst:
Erlangen einer ersten Aufgabe durch den ersten Prozess, wobei die erste Aufgabe Ausführen der zweiten Funktion durch den ersten Prozess umfasst.

5. Verfahren nach einem der Ansprüche 1 bis 4, wobei der erste Prozess ein Benutzerprozess oder ein zweiter Systemdienstprozess ist.

6. Verfahren nach einem der Ansprüche 1 bis 5, wobei der erste Systemdienstprozess mindestens zwei Teilsystem-Dienstprozesse in dem Benutzermodus integriert, der Teilsystem-Dienstprozess ein Treiberprozess, ein Netzwerk-Verwaltungsprozess oder ein Dateisystem-Verwaltungsprozess ist, die zweite Funktion eine Funktion eines Teilsystem-Dienstprozesses der mindestens zwei Teilsystem-Dienstprozesse ist, eine dritte Funktion eine für Prozesse in dem Benutzermodus lesbare und ausführbare Funktion ist und die dritte Funktion verwendet wird, eine Funktion des anderen Teilsystem-Dienstprozesses der mindestens zwei Teilsystem-Dienstprozesse aufzurufen; und
das Ausführen, durch den ersten Prozess, der zweiten Funktion in dem physikalischen Speicheradressraum gemäß der ersten Funktion umfasst:
Aufrufen und Ausführen der dritten Funktion gemäß der zweiten Funktion durch den ersten Prozess, wobei, bevor der erste Prozess zu der ersten Funktion zurückkehrt, die erste Zugriffsberechtigung unverändert bleibt.

7. Verfahren zum Aufrufen einer Interprozessfunktion, wobei das Verfahren in einem Computergerät verwendet wird und das Verfahren umfasst:
Reagieren (302) auf, durch einen Kern, einen durch einen ersten Prozess ausgelösten ersten Systemaufruf und Konfigurieren einer ersten Zugriffsberechtigung, mit der der erste Prozess auf physikalischen Speicheradressraum eines ersten Systemdienstprozesses zugreift, wobei der physikalische Speicheradressraum eine zweite Funktion speichert, die zweite Funktion eine Funktion ist, die eine Funktionalität des ersten Systemdienstprozesses implementiert, und der erste Systemaufruf den Kern anweist, die erste Zugriffsberechtigung zu konfigurieren; und
Senden (303) von Angabeinformationen von dem Kern an den ersten Prozess, wobei die Angabeinformationen angeben, ob die erste Zugriffsberechtigung aktiviert ist, und die erste Zugriffsberechtigung von dem ersten Prozess verwendet wird, die zweite Funktion auszuführen.

8. Verfahren nach Anspruch 7, wobei das Konfigurieren einer ersten Zugriffsberechtigung, mit der der erste Prozess auf physikalischen Speicheradressraum eines ersten Systemdienstprozesses zugreift, umfasst:
Konfigurieren der ersten Zugriffsberechtigung durch den Kern, wenn bestimmt wird, dass der erste Prozess eine zweite Zugriffsberechtigung aufweist und die erste Zugriffsberechtigung nicht aktiviert ist, wobei die Angabeinformationen spezifisch angeben, dass die erste Zugriffsberechtigung aktiviert ist und die zweite Zugriffsberechtigung eine Berechtigung zum Aufrufen der zweiten Funktion ist.

9. Verfahren nach Anspruch 7 oder 8, wobei das Verfahren ferner umfasst:
Reagieren auf, durch den Kern, einen durch den ersten Prozess ausgelösten zweiten Systemaufruf und Aufheben der ersten Zugriffsberechtigung, wobei der zweite Systemaufruf den Kern anweist, die erste Zugriffsberechtigung aufzuheben.

10. Verfahren nach einem der Ansprüche 7 bis 9, wobei die erste Zugriffsberechtigung eine Lese- und Ausführungsberechtigung für ein Codesegment in dem ersten Systemdienstprozess und eine Lese- und Schreibberechtigung für ein Datensegment in dem ersten Systemdienstprozess umfasst und der erste Systemaufruf ferner verwendet wird, den Kern zu veranlassen, eine Lese- und Ausführungsberechtigung für ein Codesegment in dem ersten Prozess und eine Lese- und Schreibberechtigung für ein Datensegment in dem ersten Prozess zu konfigurieren.

11. Verfahren nach einem der Ansprüche 7 bis 10, wobei der erste Prozess ein Benutzerprozess oder ein zweiter Systemdienstprozess ist.

12. Verfahren nach einem der Ansprüche 7 bis 11, wobei der erste Systemdienstprozess mindestens zwei Teilsystem-Dienstprozesse im Benutzermodus integriert und der Teilsystem-Dienstprozess ein Treiberprozess, ein Netzwerk-Verwaltungsprozess oder ein Dateisystem-Verwaltungsprozess ist; und
wenn bestimmt wird, dass der erste Prozess die zweite Zugriffsberechtigung aufweist und die erste Zugriffsberechtigung aktiviert ist, die Angabeinformationen angeben, dass die erste Zugriffsberechtigung aktiviert ist, und einer ersten Funktion angeben, den zweiten Systemaufruf nicht zu aktivieren, wobei die erste Funktion eine für Prozesse in dem Benutzermodus lesbare und ausführbare Funktion ist, die erste Funktion verwendet wird, den ersten Systemaufruf auszulösen, die zweite Funktion aufzurufen und den zweiten Systemaufruf auszulösen, und der zweite Systemaufruf den Kern anweist, die erste Zugriffsberechtigung aufzuheben.

13. Verfahren nach einem der Ansprüche 1 bis 12, wobei das Verfahren in einer Mikrokernarchitektur verwendet wird und der erste Systemdienstprozess ein Treiberprozess, ein Netzwerk-Verwaltungsprozess oder ein Dateisystem-Verwaltungsprozess ist; und
der physikalische Speicheradressraum ein durch eine Speicherverwaltungseinheit- bzw. MMU-Hardware, eine Speicherschutzeinheit- bzw. MPU-Hardware oder eine physikalische Speicherschutz- bzw. PMP-Hardware verwalteter Adressraum ist.

14. Computergerät, das einen Speicher und einen Prozessor umfasst, wobei der Speicher Code speichert, der Prozessor konfiguriert ist, den Code auszuführen, und wenn der Code ausgeführt wird, das Computergerät das Verfahren nach einem der Ansprüche 1 bis 6 und/oder das Verfahren nach einem der Ansprüche 7 bis 13 durchführt.

15. Computerlesbares Speichermedium, das computerlesbare Anweisungen umfasst, wobei, wenn die computerlesbaren Anweisungen auf einem Computer ausgeführt werden, der Computer in die Lage versetzt wird, das Verfahren nach einem der Ansprüche 1 bis 6 und/oder das Verfahren nach einem der Ansprüche 7 bis 13 durchzuführen.

## Revendications

1. Procédé d'appel de fonction interprocessus, le procédé étant utilisé dans un dispositif informatique, et le procédé comprenant :
le déclenchement (301), par un premier processus, d'un premier appel système selon une première fonction, la première fonction étant une fonction lisible et exécutable pour des processus en mode utilisateur, la première fonction étant utilisée pour déclencher le premier appel système et appeler une deuxième fonction d'un premier processus de service système, le premier appel système ordonnant à un noyau de configurer (302) une première permission d'accès avec laquelle le premier processus accède à un espace d'adressage de mémoire physique du premier processus de service système, l'espace d'adressage de mémoire physique stockant la deuxième fonction, et la deuxième fonction étant une fonction qui met en œuvre une fonctionnalité du premier processus de service système ;
la réception (303), par le premier processus, d'informations d'indication qui sont envoyées par le noyau et qui sont utilisées pour répondre au premier appel système, les informations d'indication indiquant si la première permission d'accès est activée ; et
l'exécution (304), par le premier processus, de la deuxième fonction selon la première fonction lorsqu'il est déterminé que les informations d'indication indiquent que la première permission d'accès est activée.

2. Procédé selon la revendication 1, la première fonction étant en outre utilisée pour déclencher (305) un deuxième appel système, et le deuxième appel système étant utilisé par le noyau pour annuler la première permission d'accès ; et
après l'exécution, par le premier processus, de la deuxième fonction, le procédé comprenant en outre :
le déclenchement, par le premier processus, du deuxième appel système selon la première fonction, le deuxième appel système ordonnant au noyau d'annuler la première permission d'accès.

3. Procédé selon la revendication 1 ou 2, la première permission d'accès comprenant une permission de lecture et d'exécution pour un segment de code dans le premier processus de service système et une permission de lecture et d'écriture pour un segment de données dans le premier processus de service système, et le premier appel système étant en outre utilisé pour déclencher le noyau pour configurer une permission de lecture et d'exécution pour un segment de code dans le premier processus et une permission de lecture et d'écriture pour un segment de données dans le premier processus.

4. Procédé selon l'une quelconque des revendications 1 à 3, avant le déclenchement, par un premier processus, d'un premier appel système selon une première fonction, le procédé comprenant en outre :
l'obtention, par le premier processus, d'une première tâche, la première tâche comprenant l'exécution, par le premier processus, de la deuxième fonction.

5. Procédé selon l'une quelconque des revendications 1 à 4, le premier processus étant un processus utilisateur ou un deuxième processus de service système.

6. Procédé selon l'une quelconque des revendications 1 à 5, le premier processus de service système intégrant au moins deux processus de service sous-système dans le mode utilisateur, le processus de service sous-système étant un processus de pilote, un processus de gestion de réseau, ou un processus de gestion de système de fichiers, la deuxième fonction étant une fonction d'un processus de service sous-système des au moins deux processus de service sous-système, une troisième fonction étant une fonction lisible et exécutable pour des processus dans le mode utilisateur, et la troisième fonction étant utilisée pour appeler une fonction de l'autre processus de service sous-système des au moins deux processus de service sous-système ; et l'exécution, par le premier processus, de la deuxième fonction dans l'espace d'adressage de mémoire physique selon la première fonction comprenant :
l'appel et l'exécution, par le premier processus, de la troisième fonction selon la deuxième fonction, avant que le premier processus ne revienne à la première fonction, la première permission d'accès restant inchangée.

7. Procédé d'appel de fonction interprocessus, le procédé étant utilisé dans un dispositif informatique, et le procédé comprenant :
la réponse (302), par un noyau, à un premier appel système déclenché par un premier processus, et la configuration d'une première permission d'accès avec laquelle le premier processus accède à un espace d'adressage de mémoire physique d'un premier processus de service système, l'espace d'adressage de mémoire physique stockant une deuxième fonction, la deuxième fonction étant une fonction qui met en œuvre une fonctionnalité du premier processus de service système, et le premier appel système ordonnant au noyau de configurer la première permission d'accès ; et
l'envoi (303), par le noyau, d'informations d'indication au premier processus, les informations d'indication indiquant si la première permission d'accès est activée, et la première permission d'accès étant utilisée par le premier processus pour exécuter la deuxième fonction.

8. Procédé selon la revendication 7, la configuration d'une première permission d'accès avec laquelle le premier processus accède à un espace d'adressage de mémoire physique d'un premier processus de service système comprenant :
la configuration, par le noyau, de la première permission d'accès lorsqu'il est déterminé que le premier processus a une deuxième permission d'accès et que la première permission d'accès n'est pas activée, les informations d'indication indiquant spécifiquement que la première permission d'accès est activée, et la deuxième permission d'accès étant une permission pour appeler la deuxième fonction.

9. Procédé selon la revendication 7 ou 8, le procédé comprenant en outre :
la réponse, par le noyau, à un deuxième appel système déclenché par le premier processus, et l'annulation de la première permission d'accès, le deuxième appel système ordonnant au noyau d'annuler la première permission d'accès.

10. Procédé selon l'une quelconque des revendications 7 à 9, la première permission d'accès comprenant une permission de lecture et d'exécution pour un segment de code dans le premier processus de service système et une permission de lecture et d'écriture pour un segment de données dans le premier processus de service système, et le premier appel système étant en outre utilisé pour déclencher le noyau pour configurer une permission de lecture et d'exécution pour un segment de code dans le premier processus et une permission de lecture et d'écriture pour un segment de données dans le premier processus.

11. Procédé selon l'une quelconque des revendications 7 à 10, le premier processus étant un processus utilisateur ou un deuxième processus de service système.

12. Procédé selon l'une quelconque des revendications 7 à 11, le premier processus de service système intégrant au moins deux processus de service sous-système en mode utilisateur, et le processus de service sous-système étant un processus de pilote, un processus de gestion de réseau, ou un processus de gestion de système de fichiers ; et lorsqu'il est déterminé que le premier processus a la deuxième permission d'accès et que la première permission d'accès est activée, les informations d'indication indiquant que la première permission d'accès est activée, et indiquant à une première fonction de ne pas activer le deuxième appel système, la première fonction étant une fonction lisible et exécutable pour des processus dans le mode utilisateur, la première fonction étant utilisée pour déclencher le premier appel système, appeler la deuxième fonction, et déclencher le deuxième appel système, et le deuxième appel système ordonnant au noyau d'annuler la première permission d'accès.

13. Procédé selon l'une quelconque des revendications 1 à 12, le procédé étant utilisé dans une architecture de micronoyau, et le premier processus de service système étant un processus de pilote, un processus de gestion de réseau, ou un processus de gestion de système de fichiers ; et
l'espace d'adressage de mémoire physique étant un espace d'adressage géré par un matériel d'unité de gestion de mémoire, MMU, un matériel d'unité de protection de mémoire, MPU, ou un matériel de protection de mémoire physique, PMP.

14. Dispositif informatique, comprenant une mémoire et un processeur, la mémoire stockant du code, le processeur étant configuré pour exécuter le code, et lorsque le code est exécuté, le dispositif informatique réalisant le procédé selon l'une quelconque des revendications 1 à 6 et/ou le procédé selon l'une quelconque des revendications 7 à 13.

15. Support de stockage lisible par ordinateur, comprenant des instructions lisibles par ordinateur, lorsque les instructions lisibles par ordinateur sont exécutées sur un ordinateur, l'ordinateur étant amené à réaliser le procédé selon l'une quelconque des revendications 1 à 6 et/ou le procédé selon l'une quelconque des revendications 7 à 13.
